# FASCICULE DE BREVET EUROPEEN

(11) **EP 3 022 716 B1**
(45) Date de publication et mention de la délivrance du brevet: **01.03.2023**
(21) Numéro de dépôt: 14767077.2
(22) Date de dépôt: 15.07.2014
(51) Int. Cl.: G06T 15/10, G06T 15/04, G06T 19/20

(54) **SYSTÈME ET PROCÉDÉ DE GÉNÉRATION DE TEXTURES PROCÉDURALES SUR UN OBJET**
SYSTEM UND VERFAHREN ZUR ERZEUGUNG PROZEDURALER TEXTUREN AUF EINEM OBJEKT
SYSTEM AND METHOD FOR GENERATING PROCEDURAL TEXTURES ON AN OBJECT

(30) Priorité: 18.07.2013 FR 1301710
(43) Date de publication de la demande: 25.05.2016
(73) Titulaire: ADOBE INC., San Jose, CA 95110-2704 (US)
(72) Inventeur: DEGUY, Sébastien, F-63000 Clermont-Ferrand (FR); SOUM, Christophe, F-63000 Clermont-Ferrand (FR); DAMEZ, Cyrille, F-63000 Clermont-Ferrand (FR); BATUT, Eric, F-63000 Clermont-Ferrand (FR)
(74) Mandataire: Müller-Boré & Partner Patentanwälte PartG mbB
(86) Numéro de dépôt international: PCT/IB2014/001326
(87) Numéro de publication internationale: WO 2015/008134

(56) Documents cités:
- US-A- 5 432 896
- DORSEY J ET AL: "FLOW AND CHANGES IN APPEARANCE", COMPUTER GRAPHICS PROCEEDINGS 1996 (SIGGRAPH). NEW ORLEANS, AUG. 4 - 9, 1996; [COMPUTER GRAPHICS PROCEEDINGS (SIGGRAPH)], NEW YORK, NY : ACM, US, 4 août 1996 (1996-08-04), pages 411-420, XP000682757,
- JIANYE LU ET AL: "Context-aware textures", ACM TRANSACTIONS ON GRAPHICS, vol. 26, no. 1, 1 janvier 2007 (2007-01-01), pages 3-es, XP055124808, ISSN: 0730-0301, DOI: 10.1145/1189762.1189765
- HANRAHAN P ET AL: "Direct WYSIWYG painting and texturing on 3D shapes", COMPUTER GRAPHICS, vol. 4, no. 24, 4 août 1996 (1996-08-04), pages 215-223, XP002076094, ISSN: 0097-8930

## Description

### DOMAINE TECHNIQUE DE L'INVENTION

La présente invention concerne un système et un procédé de génération de textures sur un objet à partir de données autres que les données colorimétriques.

### ETAT DE LA TECHNIQUE

Dans le domaine du graphisme assisté par ordinateur, on utilise depuis de nombreuses années une pléiade d'outils permettant d'appliquer des couleurs sur des objets. De façon classique, une couleur est appliquée sous la forme d'une couche, à la façon d'une couche de peinture appliquée sur un support physique réel.

L'application d'une couche de couleur produit classiquement un résultat uniforme. Pour effectuer des variations de couleurs, d'intensité ou d'opacité, un utilisateur doit procéder manuellement afin de régler les paramètres de couleur à chaque point, créant ainsi une cartographie colorimétrique précise et détaillée. Différents outils graphiques tels que des pinceaux ou applicateurs virtuels sont proposés à l'utilisateur qui effectue un tel « mapping ».

Pour modifier un « mapping » préalablement établi, l'utilisateur utilise les mêmes types d'outils pour appliquer point par point les paramètres modifiés, et ainsi produire un résultat colorimétrique modifié. Même si l'utilisateur peut utiliser un cadre pour sélectionner plusieurs points à modifier de façon similaire, le processus doit être effectué de façon manuelle, pour chaque image, et requiert donc un temps considérable.

On connaît également différents filtres qui peuvent être appliqués sur une ou plusieurs couleurs d'une image. Classiquement, de tels filtres agissent de façon à modifier les couleurs en fonction de paramètres intrinsèques aux couleurs elles-mêmes. Ces filtres permettent donc de créer des effets soit à partir de choix d'ambiance ou de style imposés par un utilisateur, soit en fonction des paramètres initiaux des couleurs à traiter.

Le processus de création ou modification de couleurs d'objets ne permet donc pas de prendre en compte les paramètres ou caractéristiques des objets sur lesquels la couleur est appliquée, ni de l'environnement dans lequel les objets sont mis en en scène. Ainsi, pour créer des effets réalistes, un utilisateur doit procéder manuellement pour déterminer la ou les points ou zones cibles, les paramètres à modifier, et le niveau de modification des paramètres choisis. Si un ou plusieurs objets d'une ou plusieurs scènes doivent être traités, les opérations requises peuvent impliquer un temps de mise en oeuvre considérable.

Par exemple, pour colorer une zone d'un matériau en bois afin de lui conférer un aspect boisé réaliste, un utilisateur doit effectuer les ajustements paramétriques de façon minutieuse et précise. Les outils de coloration ne prenant pas en compte les propriétés des matériaux, ou les interactions entre les objets et l'environnement, un utilisateur qui souhaite créer un effet visuel basé sur une réaction ou comportement d'un matériau doit tout d'abord concevoir ou imaginer l'effet souhaité de façon réaliste, puis effectuer les modifications colorimétriques en fonction des paramètres des couleurs présentes. Ainsi, si une couleur est appliquée sur un objet, son impact de coloration sera identique sur toutes les zones de cet objet. Par exemple, si l'objet comporte une portion métallique, une autre portion en bois et une zone en plastique, la couleur appliquée produit le même effet sur toutes ces zones, alors que sur un objet réel, les effets produits sur chacun des matériaux seraient nuancés, voire très différents selon les cas.

Le document FR2681967 divulgue un procédé pour modifier les couleurs d'une image affichée sur un dispositif d'affichage basé sur la détermination de valeurs colorimétriques. Le procédé comporte la sélection d'au moins une couleur représentative d'au moins un pixel de l'image constituée d'une pluralité de pixels, la détermination des valeurs colorimétriques de ladite au moins une couleur, la sélection d'une seconde couleur et la détermination des valeurs colorimétriques de la seconde couleur, et la modification des valeurs colorimétriques d'une pluralité de pixels de l'image de sorte que pour tout pixel donné de cette pluralité ayant des valeurs colorimétriques qui correspondent aux valeurs colorimétriques de ladite au moins une couleur, les valeurs colorimétriques du pixel donné sont modifiées pour correspondre aux valeurs colorimétriques de la seconde couleur. La couleur appliquée est identique quelque que soit la nature de l'objet (plastique, bois, etc.) et ne tient pas compte des textures, mais uniquement des variations de couleur d'une zone sélectionnée par l'utilisateur.

Le document EP0884694 divulgue un procédé permettant l'ajustement de couleurs dans des images numériques, notamment la correction des « yeux rouges » sur les photos. Les données de couleurs des pixels sont ajustées en identifiant les pixels d'une image numérique comportant des données de couleur d'origine correspondant à la couleur prédéterminée. Or la couleur appliquée est automatique se base uniquement sur des données colorimétriques, en particulier les couleurs de l'iris.

Le document WO2008066880 divulgue un procédé permettant l'obtention d'un ensemble original de deux ou plusieurs couleurs originales associées à une oeuvre. Pour ce faire, un ensemble d'entrée d'une ou plusieurs couleurs choisies par l'utilisateur est reçue. Pour chaque couleur d'origine, une cartographie de la couleur d'origine vers les couleurs dérivées est effectuée. La pluralité de couleurs dérivées est obtenue sur la base d'une ou plusieurs couleurs choisies par l'utilisateur.

Le document WO2012154258 divulgue un outil de coloration colorimétrique en 3 dimensions. Chaque pixel de l'image comprend un ensemble de valeurs de pixels dans un espace de couleurs tridimensionnel. Même si elle permet d'utiliser une palette de couleurs variée, la couleur appliquée ne varie pas en fonction du matériau sur lequel elle est appliquée.

Le document « flow and changes in appearance », Dorsey J et Al, computer graphies proceedings 1996 (siggraph), Aug.4-9, 1996 ; New York, NY : ACM, pages 411-420, divulgue un modèle phénoménologique basé sur des systèmes de particules et des équations permettant de modéliser l'absorption d'eau par la surface et la sédimentation de dépôts. Le document présente un modèle avec des exemples d'écoulements sur des géométries complexes. Ce document s'attarde en particulier à expliquer et paramétrer les phénomènes relatifs à l'absorption de l'eau sur des surfaces et la sédimentation des dépôts.
Le document US5432896 décrit un procédé mis en oeuvre par ordinateur permettant d'effectuer des modifications sur une image à l'aide d'une palette d'outils permettant d'appliquer des couleurs. Le procédé vise en fait à simuler l'effet de l'application de peinture sur une image comme cela pourrait se faire à la main, à l'aide d'outils réels sur une feuille.

Il existe donc un besoin pour pallier ces différents inconvénients.

Un objet de l'invention consiste à prévoir un système et procédé permettant d'améliorer l'efficacité et la productivité des outils de création.

Un autre objet consiste à prévoir un système et un procédé graphique permettant d'accroître la souplesse et les possibilités graphiques lors de création de couleurs ou rendus.

Un autre objet de l'invention consiste à prévoir un système et un procédé graphique permettant d'accroître le réalisme des éléments représentés.

Encore un autre objet de l'invention consiste à prévoir un système et un procédé permettant d'améliorer l'interactivité entre le rendu d'un objet représenté et son environnement.

Encore un autre objet de l'invention consiste à prévoir un système et un procédé permettant de créer un mode d'édition contextuelle prenant en compte les paramètres environnementaux.

### EXPOSE DE L'INVENTION

L'objet de l'invention est défini dans les revendications indépendantes. Des modes de réalisation particuliers font l'objet des revendications dépendantes.

Pour ce faire, l'invention prévoit différents moyens techniques. Par exemple, l'invention prévoit tout d'abord un système de génération de textures procédurales sur un objet à partir de données d'encres physiques et de données d'applicateurs physiques, comprenant:
- un accès à des données d'encres physiques comprenant une pluralité de paramètres parmi les suivants: la couleur, la viscosité, la température, la vitesse de séchage, la composition chimique, le taux de transparence;
- un accès à des données d'applicateurs physiques comprenant une pluralité de paramètres parmi les suivants : la largeur, la profondeur, l'épaisseur, le profil, la rugosité, la porosité, la souplesse de l'applicateu ;
- un accès à des données d'objets cibles comprenant des données d'objets cibles susceptibles d'être modifiées par les paramètres physiques appliqués;
- un accès à des données de règles et fonctions de mélange;
- un accès à des données physiques de textures procédurales T initiales;
- un microprocesseur et des instructions de commande;
- un module de génération de rendu virtuel hors objet avant projection sur l'objet cible, prévu pour combiner les données d'encres physiques avec les données d'applicateurs physiques;
- des données de rendu virtuel hors objet comprenant les données du rendu obtenu après la combinaison des données d'encres et des données d'applicateurs physiques avant la projection sur l'objet cible,
- un module de transformation de rendu virtuel hors objet avant projection sur l'objet cible, prévu pour adapter les données de ce rendu hors objet à un mode de projection de rendu donné sur l'objet cible;
- un module intégrateur des paramètres physiques, prévu pour générer un nouvel ensemble de textures procédurales T+1 pour le ou lesdits objets cible prenant en compte les données des objets, les données de l'ensemble de textures procédurales T, les données de rendu virtuel avant projection transformées en fonction du type de projection à effectuer. Le système comporte en outre un module de sauvegarde temporelle, prévu pour conserver les données nécessaires pour générer à nouveau un ensemble de textures d'un objet pour lequel un ou plusieurs paramètres sont modifiés ou pour revenir à une étape antérieure d'un processus, à l'état dans lequel l'architecture paramétrique se trouvait à cette étape antérieure.

Un tel système permet d'appliquer sur un ou plusieurs objets d'une scène non seulement des caractéristiques de couleur, mais aussi des caractéristiques physiques et/ou chimiques inhérentes à l'objet lui-même, à son environnement, ou à un phénomène ou processus physique ou chimique mis en interaction avec l'objet. Cette approche permet une nouvelle façon de créer et/ou faire évoluer des textures d'objet de façon à imiter avec un réalisme saisissant les phénomènes susceptibles de se produire dans l'univers réel.

De manière avantageuse, le système comprend un module intégrateur, prévu pour utiliser des règles et/ou fonctions de combinaison permettant de définir et/ou ajuster les modes d'intégration des différents paramètres physiques entre eux.

De manière avantageuse, le système comprend un accès à d'éventuelles données de taux d'application et/ou d'environnement.

Dans une variante avantageuse, le module intégrateur comporte un sous-module de sélection de règles et un sous-module de mise en oeuvre de règles permettant d'une part, de sélectionner au moins une règle et/ou fonction applicable et d'autre part, de déterminer le mode d'application de la règle afin de générer les données de textures T+1 résultantes.

Le système dispose ainsi d'une grande souplesse, permettant par exemple de prévoir des règles selon lesquelles un paramètre donné, comme par exemple la corrosion, produit un effet sur un matériau métallique, et aucun effet sur un matériau PVC.

Un tel mode temporel permet de réaliser facilement et rapidement des essais ou comparaisons entre différentes architectures paramétriques, sans devoir changer tous les paramètres d'un processus, ou de revenir à une étape antérieure, sans devoir paramétrer à nouveau toutes les données.

Selon encore une autre variante de réalisation, le système comporte par ailleurs un module de réception de données utilisateur de parcours d'application. Un tel module est adapté pour recevoir les données relatives aux points ou zones d'application des paramètres physiques.

Ainsi, dans le cas où des données utilisateur sont reçues dès l'origine ou démarrage du procédé et/ou ultérieurement, le procédé et/ou système s'apparente alors avantageusement à un outil de création pour artiste. En cas d'absence de telles données utilisateur, le procédé et/ou système peuvent s'apparenter à un processus autonome. Par exemple, pendant le déroulement d'une scène, afin de faire évoluer les objets selon un algorithme d'évolution. Selon encore un autre mode de réalisation avantageux, le système comporte par ailleurs un élément de données de taux d'application du rendu hors objet sur l'objet.

L'invention prévoit également un procédé de génération de textures procédurales sur un objet à partir de données physiques d'encres et de données d'applicateurs physiques, comprenant les étapes dans lesquelles:
- un module de génération de rendu virtuel hors objet avant projection sur l'objet cible combine les données d'encres physiques avec les données d'applicateurs physiques avant d'effectuer l'application sur l'objet cible;
- un module de transformation de rendu virtuel hors objet avant projection sur l'objet cible reçoit les données de rendu virtuel avant projection préalablement obtenues, et effectue une adaptation des ces données pour un mode de projection de rendu donné (vectorielle/unidirectionnelle ou normale/tangentielle) sur l'objet cible;
- un module intégrateur des paramètres physiques reçoit les données de l'objet cible, les données de l'ensemble de textures procédurales T, les données de rendu virtuel avant projection transformées en fonction du type de projection à effectuer, et les éventuelles données de taux d'application et d'environnement correspondants, et génère un nouvel ensemble de textures procédurales T+1 pour le ou lesdits objets, prenant en compte ces données; et
- un module de sauvegarde temporelle conserve les données nécessaires pour générer à nouveau un ensemble de textures procédurales T+1 d'un objet pour lequel un ou plusieurs paramètres sont modifiés ou pour revenir à une étape antérieure d'un processus à l'état dans lequel l'architecture paramétrique se trouvait à cette étape antérieure.

Dans un mode de réalisation avantageux, le module intégrateur reçoit des règles et/ou fonctions d'intégration pour définir et/ou ajuster les modes d'action des différents paramètres physiques entre eux.

Selon encore un autre mode de réalisation, un sous-module de sélection de règles sélectionne au moins une règle et/ou fonction applicable et un sous-module de mise en oeuvre de règles détermine le mode d'application de la règle afin de générer les données de textures T+1 résultantes. Dans une autre variante, un module d'entrée de données utilisateur de parcours d'application reçoit les données relatives au parcours d'application des paramètres physiques.

### DESCRIPTION DETAILLEE DE L'INVENTION

### DEFINITIONS

Par « encre » ou « peinture » physique, on entend un élément solide, liquide, gazeux ou un mélange de ces phases, qui, lorsqu'il est appliqué sur un objet, engendre une modification physique au moins de la surface de cette objet, en particulier des textures de cet objet, de sorte qu'au moins un de ses paramètres ou caractéristiques physiques, en particulier une caractéristique visible, soit modifié.

Par « paramètre physique », on entend tout élément, propriété ou caractéristique physique et/ou chimique, susceptible d'être mesuré ou détecté ou observé ou quantifié, caractérisant un objet, une encre, un environnement, un applicateur, etc.

**Par** « architecture paramétrique », on entend l'ensemble de paramètres permettant de définir les caractéristiques physiques, chimiques (constituants, propriétés, aspect visuel d'un objet, texture, encre, etc.) et comportementales d'un élément (encre, texture, objet, etc.).

Par « applicateur physique », on entend un élément, en particulier un élément virtuel visible ou non sur une scène, permettant d'appliquer une encre ou peinture physique sur un objet, tel qu'un pinceau, rouleau, crayon, pistolet applicateur, gicleur ou vaporisateur, plaque, outil, etc.

Par « taux d'application », on entend l'opacité globale du coup de pinceau/applicateur qu'un utilisateur applique, réglable par l'utilisateur et décorrélée des autres paramètres telle que l'encre. Par exemple, lorsqu'un utilisateur commence le processus de peinture sur un objet pas ou peu recouvert, le « taux d'application » peut être réglé à une valeur importante, pour que chaque coup de pinceau/applicateur impacte fortement la texture de l'objet. Lorsque l'utilisateur arrive à une phase d'affinement et de petites retouches, il peut régler ce taux à une valeur plus faible pour ne pas complètement modifier les endroits déjà peints, mais au contraire ajuster délicatement certains détails.

Selon les cas et les modes de réalisation, le taux d'application peut être exprimé de plusieurs façons. Par exemple, on peut exprimer le taux d'application τ avec une valeur comprise entre 0 et 1. Si on a deux entrées A (la texture existante) et B (la texture à appliquer), la sortie O est égale à « A*(1-T) + B*T ». Si τ=0, on n'applique rien et la nouvelle texture est égale à la texture existante. Si τ=1, la nouvelle texture est égale à la texture à appliquer (aux points concernés par le coup de pinceau), et l'ancienne texture est pleinement recouverte aux endroits concernés.

Par « règle » ou « fonction » de mélange, on entend une description du processus qui détermine comment réagissent un matériau (et éventuellement une ou plusieurs « encres » déjà appliquées sur le matériau à un endroit donné) et une encre appliquée sur ce matériaux. A titre illustratif, voici quelques exemples de règles :
- un liquide appliqué sur bois nu est absorbé par le bois. En variante, il a pour effet d'assombrir la teinte du bois ;
- un liquide appliqué sur un vernis ou un plastique n'est pas absorbé du tout et confère un effet de « goutte » sur la surface du matériau ;
- de la chaleur appliquée sur un matériau peint a pour effet de faire écailler la peinture puis de la brûler, en fonction de la température réglée par l'utilisateur, et éventuellement de calciner le matériau sur lequel la peinture est appliquée si celuici est combustible ;
- l'application d'un acide ou d'un jet de sable sur un plastique brillant va progressivement le dépolir, le rendre moins brillant et de plus en plus rugueux. Grâce au procédé et au système décrit dans ce qui suit, les différentes étapes d'un processus évolutif peuvent être déterminées et présentées.

Par « texture procédurale », on entend une texture définie à l'aide d'algorithmes et/ou mathématiquement et affichée au moyen d'un moteur de rendu permettant de transformer les données mathématiques en format image classique tel que bitmap par exemple.

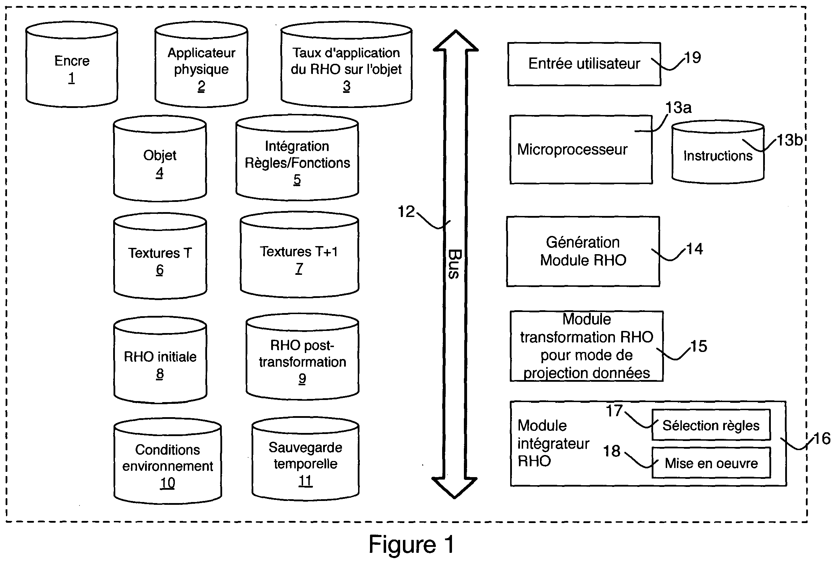

La figure 1 illustre un exemple de système de génération de textures procédurales selon l'invention. Il comporte au moins un microprocesseur 13a, adapté pour la mise en oeuvre d'instructions contenues dans une mémoire d'instructions 13b. Une pluralité de modules est avantageusement fournie par la mise en oeuvre des instructions par le microprocesseur.

Un élément de données d'encre 1 stocke les données des paramètres physiques de la ou des encres disponibles. Ces données comprennent par exemple la couleur, la viscosité, la température, la vitesse de séchage, la composition chimique, le taux de transparence, etc.

Un élément de données d'applicateurs physiques 2 stocke les données des caractéristiques d'applicateurs physiques. Ces données peuvent comprendre une pluralité de paramètres tels que la largeur, la profondeur ou l'épaisseur, le profil, la rugosité, la porosité, la souplesse de l'applicateur, etc. De manière générale, tout paramètre susceptible d'influencer les caractéristiques d'application d'une encre sur un objet de destination. Des indices peuvent être affectés à chacun des paramètres afin de pondérer leurs niveaux d'importance relative.

Un élément de données de taux d'application 3 stocke les données des paramètres physiques en relation avec le taux d'application du rendu hors objet.

Un élément de données d'objets cibles 4 stocke les données des objets cibles susceptibles d'être modifiés par les paramètres physiques appliqués. Ces données comprennent par exemple les caractéristiques physiques des objets cibles telles que les formes, les dimensions, le poids, le coefficient d'absorption, la porosité, la composition chimique et les diverses caractéristiques en relation avec la surface et les textures des objets.

Un élément 6 de données de textures T d'objets stocke les données des textures initiales des objets cibles sur lesquelles une ou plusieurs encres sont susceptibles d'être appliquées. Les éventuelles données de textures T+1 nouvellement obtenues sont contenues dans un élément mémoire 7. Ces données comprennent par exemple les caractéristiques physiques telles que la composition de l'encre, la couleur, l'épaisseur, la luminosité, le relief, les caractéristiques de réflexion de la lumière, etc.

Un élément de données d'intégration 5 stocke les données des règles et/ou fonctions à appliquer par l'intégrateur 16 pour générer le nouvel ensemble de textures T+1. Ces règles et/ou fonctions permettre de prendre en compte un ou plusieurs processus susceptibles d'influencer le résultat obtenu, comme par exemple le mélange des couleurs (par exemple, une règle peut permettre de calculer les moyennes des couleurs appliquées), les interactions chimiques entre les constituants, la diffusion par capillarité, la combustion ou tout processus thermodynamique, un effet de goutte, une modification ou altération de la surface de l'objet (par exemple : corrosion ou oxydation, moisissure, écaillement, etc.)

**Un** élément 8 de données de rendu hors objet (RHO) stocke les données du rendu obtenu après la combinaison des données d'encres et des données d'applicateurs physiques. Les éventuelles données de rendu hors objet (RHO) post-transformation obtenues après la prise en compte du mode de projection prévu sont contenues dans un élément mémoire 9. Ces données comprennent par exemple les caractéristiques physiques telles que la composition de l'encre, la couleur, l'épaisseur, la luminosité, le relief, les caractéristiques de réflexion de la lumière, etc.

Un élément optionnel de paramètres en relation avec les conditions d'environnement 10 comprend les paramètres susceptibles d'affecter plusieurs éléments de la scène, comme par exemple des données de température, de pression, humidité, force physique (magnétique, gravitationnelle ou autre), etc.

Un module facultatif de sauvegarde temporelle 11 permet de conserver des données reliées à une échelle temporelle, en particulier les entrées utilisateur telles que les données de parcours, de pression, de direction, d'opacité, etc. Ce module permet par exemple d'exécuter à nouveau une simulation d'animation après changement de un ou plusieurs paramètres, en effectuant uniquement les opérations requises par les données modifiées. Il est ainsi possible de réaliser simplement et rapidement plusieurs simulations successives basées sur une simulation précédente, ou de retrouver une simulation préalablement effectuée.

**Les** éléments mémoires précédemment décrits et/ou les différents modules peuvent être regroupés en un ou plusieurs éléments et un ou plusieurs modules sans affecter le fonctionnement du système de façon significative.

**Une** entrée utilisateur 19 permet de recevoir des données en provenance d'une source externe, et notamment d'un utilisateur qui fournit un parcours d'application des paramètres physiques. Cette entrée peut permettre de recevoir plusieurs types de paramètres tels que des données de pression, de direction, d'opacité, etc., permettant de bien définir, quantifier et délimiter les éléments paramétriques appliqués.

Un module 14 de génération de rendu hors objet (RHO) est prévu pour générer un rendu hors objet comportant des données physiques de RHO compatibles pour une projection contre un objet cible de façon indépendante du mode de projection. Le RHO est obtenu à partir des données physiques d'encre et d'applicateurs physiques.

Un module 15 de transformation de RHO, prévu pour adapter les données du RHO à un mode de projection de rendu donné (vectorielle/unidirectionnelle ou normale/tangentielle).

Un module 16 intégrateur des paramètres physiques, prévu pour générer un nouvel ensemble de textures T+1 pour ledit objet prenant en compte les données de l'objet, les données de l'ensemble de textures T, les données de RHO transformé, et les éventuelles données de taux d'application et d'environnement correspondants.

Le module intégrateur 16 comporte un sous-module 17 de sélection de règles et un sous-module 18 de mise en oeuvre de règles permettant d'une part, de sélectionner au moins une règle et/ou fonction applicable et d'autre part, de déterminer le mode d'application de la règle afin de générer les données de textures T+1 résultantes.

Un bus 12 permet les transferts de données entres les divers modules et les éléments mémoires décrits ci-après.

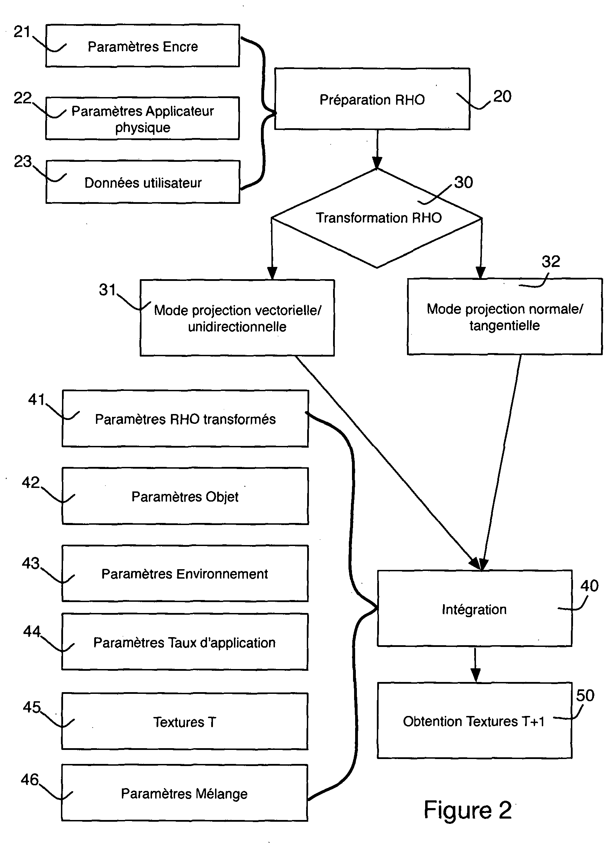

La figure 2 montre un organigramme fonctionnel des principales étapes du procédé de génération de textures procédurales selon l'invention. A l'étape 20, le système est initialisé et le module 14 de génération de rendu hors objet (RHO) reçoit les données 21 et 22 en relation avec les paramètres encre et les paramètres d'applicateur physique et les données utilisateur 23, en relation avec le parcours d'application des paramètres physiques. Le rendu hors objet est généré par le module 14 de génération de rendu hors objet.

A l'étape 30, le module 15 de transformation du rendu hors objet effectue une transformation du rendu dans le format requis par le mode de projection applicable. En fonction de ce mode, s'il s'agit d'un mode de projection vectorielle ou unidirectionnelle, l'étape 31 est concernée. Dans le cas d'un mode de projection normale ou tangentielle, l'étape 32 est effectuée.

Indépendamment du type de projection, l'étape suivante 40 prévoit une intégration du rendu hors objet par le module intégrateur. Cette étape implique une sélection des règles et/ou fonctions applicables et une mise en oeuvre de l'intégration en se basant sur les règles et/ou fonctions applicables. Cette étape prévoit l'intégration des paramètres physiques tels que les paramètres de l'objet, le taux d'application, les paramètres de texture T et les paramètres d'environnement afin de générer et/ou adapter un nouvel ensemble de textures T+1 pour le ou les objets affectés par les événements se produisant dans la scène. Enfin, à l'étape 50, les données de texture T+1 sont obtenues.

### VARIANTES ET AUTRES MODES DE REALISATION

Dans ce qui précède, le système et procédé selon l'invention est présenté dans un environnement de travail adapté pour un outil d'édition destiné à un utilisateur appelé à créer ou modifier le rendu d'un ou plusieurs objets.

En variante, le système et le procédé selon l'invention sont utilisés en mode autonome, pour la génération de rendus d'objets à partir de paramètres physiques préétablis ou pouvant être calculés par le système lui-même, par exemple en fonction de résultats intermédiaires. De tels exemples de réalisation sont avantageusement utilisés pour des jeux vidéo ou films, en particulier des jeux ou films dans lesquels les rendus ou textures sont générés par un moteur de génération de textures procédurales. Le document WO2012014057, incorporé par référence dans le présent document, décrit un exemple d'un tel système et procédé de rendu.

Le système et procédé selon l'invention permettent de générer et/ou modifier des rendus d'objets en prenant en compte les facteurs techniques (physiques, chimiques, thermodynamiques, etc.) inhérents aux objets eux-mêmes ainsi qu'à l'environnement de la scène.

Par exemple, pour créer un effet de corrosion sur un objet, un utilisateur peut utiliser une encre ou peinture et des objets avec des paramètres en relations avec la corrosion. Parmi ces paramètres physiques (autres que les données de couleur) les comportements des objets en relation avec les encres ou peintures appliquées, c'est-à-dire les interactions entre les différents éléments physiques peuvent par exemple définir que des matériaux tels que le plastique ne réagissent pas à des effets de corrosion, l'acier développe des zones corrodées, le cuivre s'oxyde, etc.

Selon les modes de réalisations, certains paramètres peuvent être affectés soit aux encres ou peintures physiques, soit aux objets, soit à l'environnement, ou encore aux règles ou fonctions de mélange. La répartition ou l'architecture paramétrique peut aussi varier pour produire de rendus comparables.

Dans un autre exemple d'utilisation du procédé et du système selon l'invention, la peinture ou encre physique à appliquer aux objets comporte uniquement des paramètres non colorimétriques, comme par exemple des données d'énergie thermique ou chaleur, des données de pression, etc. Dans un exemple où l'applicateur physique applique de la chaleur, ce dernier peut représenter un fer à souder permettant de réaliser des opérations de pyrogravure sur une plaque de bois. Si une bordure métallique délimite la zone à graver en bois, les paramètres et règles permettent de gérer les phénomènes physiques de sorte que l'application du fer à souder sur le métal ne produit pas d'effet « brûlé ». Les données de parcours d'application permettent de définir le dessin ou motif produit par l'opération de gravure. Selon le cas, les données de parcours peuvent provenir d'un utilisateur qui simule le déplacement du fer, ou d'une carte d'application fournie en entrée.

Dans un autre exemple, un dissolvant à peinture est appliqué sur un dessus de table à l'aide de gicleur. Les textures initiales de bois peint sont substituées par des textures montrant le même bois, mais à l'état naturel, sans peinture. Selon le parcours d'application, une ou plusieurs zones conservant des restes de peinture peuvent encore être présentes sur l'objet.

Le tableau 1, ci-après, illustre des exemples de paramètres et règles permettant de mettre en oeuvre les exemples évoqués.

**TABLEAU 1 : exemple de paramètres physiques**

| Encre/ peinture | applicateur | objet | Règle /fonction de mélange | Texture initiale | Texture finale |
|---|---|---|---|---|---|
| Liquide corrosif | Pinceau ou rouleau | Corps métallique | Mode et intensité de corrosion sur métal | Métal état neuf | Métal aspect rouille |
| Chaleur | Fer à souder | Plaque de bois | Effet et intensité de la chaleur | Bois clair | Bois brûlé |
| Liquide dissolvant | Spray (gicleur) | Dessus de table | Effet et intensité de l'attaque chimique | Bois peint | Bois naturel |

La sauvegarde temporelle permet avantageusement de revenir en arrière sur un processus afin de retrouver un des multiples états précédents. Elle peut également permettre de refaire un processus en modifiant seulement un ou quelques paramètres, tout en bénéficiant des autres paramètres non modifiés, évitant ainsi de devoir paramétrer à nouveau toutes les données. Ceci permet par exemple de comparer facilement et rapidement les résultats que l'on peut obtenir en modifiant uniquement certains paramètres.

Par exemple, il est possible de changer une caractéristique d'une encre (par exemple la couleur) pour un coup de pinceau ou plusieurs préalablement appliqué en cours de processus. Dans un autre exemple, la viscosité d'une encre est modifiée afin de réduire l'impact de cette encre sur une couche préalable.

Les Figures et leurs descriptions faites ci-dessus illustrent l'invention plutôt qu'elles ne la limitent.

Les signes de références dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments. En outre, le système et procédé préalablement décrits fonctionnent avantageusement en multi-canal, c'est-à-dire en traitant plusieurs textures (diffuse, normale, etc.) à chaque étape. Ainsi, les termes « texture T (ou T+1) » et « textures T (ou T+1) » concernent une ou plusieurs textures selon les cas ou modes de réalisation.

## Revendications

1. Système de génération de textures procédurales sur un objet à partir de données d'encres physiques et de données d'applicateurs physiques, comprenant:
- un accès à des données (1) d'encres physiques comprenant une pluralité de paramètres parmi les suivants: la couleur, la viscosité, la température, la vitesse de séchage, la composition chimique, le taux de transparence;
- un accès à des données (2) d'applicateurs physiques comprenant une pluralité de paramètres parmi les suivants: la largeur, la profondeur, l'épaisseur, le profil, la rugosité, la porosité, la souplesse de l'applicateur;
- un accès à des données (4) d'objets cibles comprenant des données d'objets cibles susceptibles d'être modifiées par les paramètres physiques appliqués;
- un accès à des données (5) de règles et fonctions de mélange;
- un accès à des données physiques (6) de textures procédurales T initiales;
- un microprocesseur (13a) et des instructions de commande (13b);
- un module (14) de génération de rendu virtuel hors objet avant projection sur l'objet cible, prévu pour combiner les données d'encres physiques avec les données d'applicateurs physiques;
- des données de rendu virtuel hors objet (8,9) comprenant les données du rendu obtenu après la combinaison des données d'encres (1) et des données d'applicateurs physiques (2) avant la projection sur l'objet cible,
- un module (15) de transformation de rendu virtuel hors objet avant projection sur l'objet cible, prévu pour adapter les données de ce rendu hors objet à un mode de projection de rendu donné sur l'objet cible;
- un module intégrateur (16) des paramètres physiques, prévu pour générer un nouvel ensemble de textures procédurales T+1 pour le ou lesdits objets cible prenant en compte les données des objets, les données de l'ensemble de textures procédurales T, les données de rendu virtuel avant projection transformées en fonction du type de projection à effectuer; et
comportant par ailleurs un module de sauvegarde temporelle (11) prévu pour conserver les données nécessaires pour générer à nouveau un ensemble de textures procédurales d'un objet pour lequel un ou plusieurs paramètres sont modifiés ou pour revenir à une étape antérieure d'un processus, à l'état dans lequel l'architecture paramétrique se trouvait à cette étape antérieure.

2. Système de génération de textures selon la revendication 1, comprenant un module intégrateur (16), prévu pour utiliser des règles et/ou fonctions de combinaison permettant de définir et/ou ajuster les modes d'intégration des différents paramètres physiques entre eux.

3. Système de génération de textures selon la revendication 2, dont le module intégrateur (16) comporte un sous-module (17) de sélection de règles et un sous-module (18) de mise en oeuvre de règles permettant d'une part, de sélectionner au moins une règle et/ou fonction applicable et d'autre part, de déterminer le mode d'application de la règle afin de générer les données de textures procédurales T+1 résultantes.

4. Système de génération de textures selon l'une des revendications précédentes, comportant par ailleurs un module de réception (19) de données utilisateur de parcours d'application.

5. Système de génération de textures selon l'une des revendications précédentes, comportant par ailleurs un accès à des données (3) de taux d'application du rendu hors objet sur l'objet.

6. Procédé de génération de textures procédurales sur un objet à partir de données physiques d'encres (42) et de données d'applicateurs physiques (43), comprenant les étapes dans lesquelles:
- un module (14) de génération de rendu virtuel hors objet avant projection sur l'objet cible combine les données d'encres physiques avec les données d'applicateurs physiques avant d'effectuer l'application sur l'objet cible;
- un module (15) de transformation de rendu virtuel hors objet avant projection sur l'objet cible reçoit les données de rendu virtuel avant projection préalablement obtenues, et effectue une adaptation de ces données pour un mode de projection de rendu donné sur l'objet cible;
- un module (16) intégrateur des paramètres physiques reçoit les données de l'objet cible, les données de l'ensemble de textures procédurales T, les données de rendu virtuel avant projection transformées en fonction du type de projection à effectuer, et les éventuelles données de taux d'application et d'environnement correspondants, et génère un nouvel ensemble de textures procédurales T+1 pour le ou lesdits objets, prenant en compte ces données; et
- un module de sauvegarde temporelle (11) conserve les données nécessaires pour générer à nouveau un ensemble de textures procédurales T+1 d'un objet pour lequel un ou plusieurs paramètres sont modifiés ou pour revenir à une étape antérieure d'un processus à l'état dans lequel l'architecture paramétrique se trouvait à cette étape antérieure.

7. Procédé de génération de textures selon la revendication 6, dans lequel le module intégrateur reçoit des règles et/ou fonctions d'intégration pour définir et/ou ajuster les modes d'action des différents paramètres physiques entre eux.

8. Procédé de génération de textures selon la revendication 7, dans lequel un sous-module (17) de sélection de règles sélectionne au moins une règle et/ou fonction applicable et un sous-module (18) de mise en oeuvre de règles pour déterminer le mode d'application de la règle afin de générer les données de textures procédurales T+1 résultantes.

9. Procédé de génération de textures selon la revendication 7 ou 8, dans lequel un module d'entrée de données utilisateur (19) de parcours d'application reçoit les données relatives au parcours d'application des paramètres physiques.

## Patentansprüche

1. System zur Erzeugung prozeduraler Texturen auf einem Objekt ausgehend von physikalischem Daten von Farben und physikalischen Daten von Appliziereinrichtungen, umfassend:
- einen Zugriff auf physikalische Daten (1) von Farben, die eine Vielzahl von den folgenden Parametern umfassen: die Farbe, die Viskosität, die Temperatur, die Trocknungsgeschwindigkeit, die chemische Zusammensetzung, den Durchlassgrad;
- einen Zugriff auf physikalische Daten (2) von Appliziereinrichtungen, die eine Vielzahl von den folgenden Parametern umfassen: die Breite, die Tiefe, die Dicke, das Profil, die Rauigkeit, die Porosität, die Biegsamkeit der Appliziereinrichtung;
- einen Zugriff auf Daten (4) von Zielobjekten, die Daten von Zielobjekten umfassen, die von den angewandten physikalischen Parametern abgewandelt werden können;
- einen Zugriff auf Daten (5) von Mischungsregeln und -funktionen;
- einen Zugriff auf physikalische Daten (6) prozeduraler Ausgangstexturen T;
- einen Mikroprozessor (13a) und Befehlsanweisungen (13b);
- ein Modul (14) zur Erzeugung einer virtuellen Wiedergabe ohne Objekt vor der Projektion auf das Zielobjekt, das zum Kombinieren der physikalischen Daten von Farben mit den physikalischen Daten von Appliziereinrichtungen vorgesehen ist;
- Daten zur virtuellen Wiedergabe ohne Objekt (8, 9), welche die Daten der Wiedergabe umfassen, die nach der Kombination der Daten (1) von Farben und der physikalischen Daten (2) von Appliziereinrichtungen vor der Projektion auf das Zielobjekt erhalten wird,
- ein Modul (15) zur Umwandlung der virtuellen Wiedergabe ohne Objekt vor der Projektion auf das Zielobjekt, das zum Anpassen der Daten dieser Wiedergabe ohne Objekt an einen gegebenen Wiedergabeprojektionsmodus auf dem Zielobjekt vorgesehen ist;
- ein Modul (16) zur Integration der physikalischen Parameter, das zum Erzeugen einer neuen Menge prozeduraler Texturen T+1 für das oder die Zielobjekte unter Berücksichtigung der Daten der Objekte, der Daten der Menge prozeduraler Texturen T, der Daten zur virtuellen Wiedergabe vor der Projektion vorgesehen ist, die in Abhängigkeit vom Typ der vorzunehmenden Projektion umgewandelt werden; und
ferner umfassend ein Modul (11) zur zeitweiligen Speicherung, das zum Bewahren der Daten, die zum erneuten Erzeugen einer Menge prozeduraler Texturen eines Objekts erforderlich sind, für das ein oder mehrere Parameter abgewandelt werden, oder zur Rückkehr zu einem vorhergehenden Schritt eines Prozesses in dem Zustand vorgesehen ist, in dem die Parameterarchitektur sich in diesem vorhergehenden Schritt befand.

2. System zur Erzeugung von Texturen nach Anspruch 1, das ein Integrationsmodul (16) umfasst, das zum Verwenden von Kombinationsregeln und/oder -funktionen vorgesehen ist, die das Definieren und/oder Anpassen der Integrationsmodi der verschiedenen Parameter untereinander ermöglichen.

3. System zur Erzeugung von Texturen nach Anspruch 2, wobei das Integrationsmodul (16) ein Untermodul (17) zur Auswahl von Regeln und ein Untermodul (18) zur Umsetzung von Regeln umfasst, die einerseits das Auswählen mindestens einer anwendbaren Regel und/oder Funktion und andererseits das Bestimmen des Anwendungsmodus der Regel zum Erzeugen der resultierenden Daten prozeduraler Texturen T+1 ermöglichen.

4. System zur Erzeugung von Texturen nach einem der vorhergehenden Ansprüche, das ferner ein Modul (19) zum Empfang von Anwendungsverlaufsbenutzerdaten umfasst.

5. System zur Erzeugung von Texturen nach einem der vorhergehenden Ansprüche, das ferner einen Zugriff auf Daten (3) der Applikationsrate der Wiedergabe ohne Objekt auf dem Objekt umfasst.

6. Verfahren zur Erzeugung prozeduraler Texturen auf einem Objekt ausgehend von physikalischen Daten (42) von Farben und physikalischen Daten (43) von Appliziereinrichtungen, das die folgenden Schritte umfasst, in denen:
- ein Modul (14) zur Erzeugung einer virtuellen Wiedergabe ohne Objekt vor der Projektion auf das Zielobjekt die physikalischen Daten von Farben mit den physikalischen Daten von Appliziereinrichtungen kombiniert, bevor die Applizierung auf das Zielobjekt vorgenommen wird;
- ein Modul (15) zur Umwandlung der virtuellen Wiedergabe ohne Objekt vor der Projektion auf das Zielobjekt die vorhergehend erhaltenen Daten der virtuellen Wiedergabe vor der Projektion empfängt und eine Anpassung dieser Daten für einen gegebenen Wiedergabeprojektionsmodus auf dem Zielobjekt vornimmt;
- ein Modul (16) zur Integration der physikalischen Parameter die Daten des Zielobjekts, die Daten der Menge prozeduraler Texturen T, die in Abhängigkeit vom durchzuführenden Projektionstyp umgewandelten Daten der virtuellen Wiedergabe vor der Projektion und die gegebenenfalls vorhandenen entsprechenden Applikationsraten- und Umgebungsdaten empfängt und eine neue Menge prozeduraler Texturen T+1 für das oder die Objekte unter Berücksichtigung dieser Daten erzeugt; und
- ein Modul (11) zur zeitweiligen Speicherung die Daten bewahrt, die zum erneuten Erzeugen einer Menge prozeduraler Texturen T+1 eines Objekts, für die ein oder mehrere Parameter abgewandelt werden, oder zur Rückkehr zu einem vorhergehenden Schritt eines Prozesses in dem Zustand erforderlich sind, in dem die Parameterarchitektur sich in diesem vorhergehenden Schritt befand.

7. Verfahren zur Erzeugung von Texturen nach Anspruch 6, wobei das Integrationsmodul Integrationsregeln und/oder -funktionen zum Definieren und/oder Anpassen der Wirkungsmodi der verschiedenen physikalischen Parameter untereinander empfängt.

8. Verfahren zur Erzeugung von Texturen nach Anspruch 7, wobei ein Untermodul (17) zur Auswahl von Regeln mindestens eine anwendbare Regel und/oder Funktion sowie ein Untermodul (18) zur Umsetzung von Regeln zum Bestimmen des Anwendungsmodus der Regel zum Erzeugen der resultierenden Daten prozeduraler Texturen T+1 auswählt.

9. Verfahren zur Erzeugung von Texturen nach Anspruch 7 oder 8, wobei ein Modul (19) zur Eingabe von Anwendungsverlaufsbenutzerdaten die Daten empfängt, welche den Anwendungsverlauf der physikalischen Parameter betreffen.

## Claims

1. A system for generating procedural textures on an object using physical ink data and physical applicator data, comprising:
- access to physical ink data (1) comprising a plurality of parameters among the following: color, viscosity, temperature, drying rate, chemical composition, transparency level;
- access to physical applicator data (2) comprising a plurality of parameters among the following: width, depth, thickness, profile, roughness, porosity, flexibility of the applicator;
- access to target object data (4) comprising target object data which may be modified by the applied physical parameters;
- access to mixing rule and function data (5);
- access to original physical procedural texture T data (6);
- a microprocessor (13a) and control instructions (13b);
- a before-projection on the target object off-object virtual rendition generator module (14) which is provided to combine the physical ink data with the physical applicator data;
- off-object virtual rendition data (8, 9) comprising the rendition data obtained after combining the ink data (1) and the physical applicator data (2) before projection on the target object;
- a before-projection on the target object off-object virtual rendition transformation module (15) which is provided to adapt the data of said off-object rendition to a given rendition projection mode on the target object;
- a physical parameter integrator module (16) which is provided to generate a new set of procedural textures T + 1 for said target objects(s), taking into account the object data, the procedural texture set T data, the before-projection virtual rendition data which are transformed as a function of the type of projection to be effected; and
- further including a temporal storage module (11) which is provided to keep the data required to generate, again, a set of procedural textures of an object for which one or more parameters are modified, or to return to an earlier step of a process, in the condition in which the parametric architecture was in said earlier step.

2. The system for generating textures according to Claim 1, comprising an integrator module (16) which is provided to use combination rules and/or functions allowing the modes in which the different physical parameters are integrated together to be defined and/or adjusted.

3. The system for generating textures according to Claim 2, the integrator module (16) of which includes a rule selection sub-module (17) and a rule implementation sub-module (18) allowing, on the one hand, at least one applicable rule and/or function to be selected and, on the other hand, the mode of application of the rule to be determined in order to generate the resulting procedural texture T+1 data.

4. The system for generating textures according to any one of the preceding claims, further including an application-path user-data receiving module (19).

5. The system for generating textures according to any one of the preceding claims, further including access to data (3) relevant to the application rate of the off-object rendition on the object.

6. A method for generating procedural textures on an object using physical ink data (42) and physical applicator data (43), comprising the following steps, in which:
- a before-projection on the target object off-object virtual rendition generator module (14) combines the physical ink data with the physical applicator data prior to the application on the target object;
- a before-projection on the target object off-object virtual rendition transformation module (15) receives the previously obtained virtual rendition data before projection, and adapts said data to a given rendition projection mode on the target object;
- a physical parameter integrator module (16) receives the target object data, the procedural texture set T data, the before-projection virtual rendition data which are transformed as a function of the type of projection to be effected, and any corresponding application rate and environmental data, and generates a new set of procedural textures T + 1 for said object(s), taking this data into account; and
- a temporal storage module (11) keeps the data required to generate, again, a set of procedural textures T+1 of an object for which one or more parameters are modified or to return to an earlier step of a process, in the condition in which the parametric architecture was in said earlier step.

7. The method for generating textures according to Claim 6, in which the integrator module receives integration rules and/or functions to define and/or adjust the modes in which the different physical parameters act together.

8. The method for generating textures according to Claim 7, in which a rule selection sub-module (17) selects at least one applicable rule and/or function and a rule implementation sub-module (18) to determine the mode of application of the rule in order to generate the resulting procedural texture T+1 data.

9. The method for generating textures according to Claim 7 or 8, in which an application-path user-data input module (19) receives the data relating to the application path of the physical parameters.
